# EUROPÄISCHE PATENTANMELDUNG

(11) **EP 4 345 997 A1**
(43) Veröffentlichungstag der Anmeldung: **03.04.2024**
(21) Anmeldenummer: 23200873.0
(22) Anmeldetag: 29.09.2023
(51) Int. Cl.: H01M 50/249, H01M 50/507, H02G 5/04

(54) **STROMSCHIENENANORDNUNG, FAHRZEUGBATTERIE UND HERSTELLVERFAHREN EINER STROMSCHIENENANORDNUNG**

(30) Priorität: 30.09.2022 DE 102022125430
(71) Anmelder: Webasto SE, 82131 Stockdorf (DE)
(72) Erfinder: Pradella, Moritz, 82131 Stockdorf (DE); Morvilius, Matthias, 82131 Stockdorf (DE)
(74) Vertreter: Nordmeyer, Philipp Werner

(57) **Zusammenfassung**

Die vorliegende Erfindung betrifft eine Stromschienenanordnung (1) zum Einbau in einer Fahrzeugbatterie für ein Elektrofahrzeug, umfassend ein Gehäuse (2) und eine Mehrzahl von im Gehäuse (2) aufgenommenen Stromschienen (5), wobei an einer Innenwand (10) eines Gehäuseteiles, bevorzugt an einer Innenwand (10) einer Unterschale (3) und/oder an einer Innenwand (10) einer Oberschale (4), ein aus einem ausgehärteten Kunststoffschaum ausgebildeter Stromschienenaufnahmekörper (6) angeschäumt ist, wobei jede Stromschiene (5) in je einer Aufnahme (7) im Stromschienenaufnahmekörper (6) eingesteckt und in dieser gehalten ist; sie betrifft ferner eine Fahrzeugbatterie für ein Elektrofahrzeug und ein Verfahren zum Herstellen einer Stromschienenanordnung.

## Beschreibung

### Technisches Gebiet

Die vorliegende Erfindung betrifft eine Stromschienenanordnung zum Einbau in eine Fahrzeugbatterie in einem Elektrofahrzeug, ferner eine Fahrzeugbatterie für ein Elektrofahrzeug und ein Herstellverfahren für eine Stromschienenanordnung zum Einbau in eine Fahrzeugbatterie in einem Elektrofahrzeug.

### Stand der Technik

Im Bereich der Fahrzeugbatterien in Elektrofahrzeugen ist es bekannt, die Batteriezellen und Batteriemodule durch Sammelleiter, welche synonym als Stromschienen bezeichnet werden, elektrisch miteinander zu kontaktieren beziehungsweise zu verschalten. Die Stromschienen können als starre Stromführungen aus gut leidendem Metall, oft Kupfer oder Aluminium, genauer aus Metallblechbahnen, beispielsweise aus Kupfer, ausgebildet sein. Da gut leitende Metalle wie Kupfer vergleichsweise teuer sind, wird versucht, sie sparsam einzusetzen. So gibt es beispielsweise Bestrebungen, den Querschnitt der verwendeten Stromschienen so klein wie möglich zu halten. Ein der Reduzierung des Querschnitts entgegenstehendes Kriterium ist, mehr als die elektrische Tragfähigkeit, die Wärmeentwicklung in den Stromschienen. Denn umso besser die durch Reibung der Elektronen beim Stromfluss entstehende Wärme abgeleitet werden kann, desto kleiner kann der Querschnitt der Stromschiene werden. Zudem steigt mit zunehmender Temperatur der Stromschiene deren ohmscher Widerstand, was aus Effizienzgründen vermieden werden sollte.

Oftmals wird als Anforderung als Teil des Lastenheftes einer Fahrzeugbatterie ein Temperaturlimit unterhalb von 100° C, typischerweise ca. 80° C, angegeben. Dieses Temperaturlimit darf im Betrieb nicht überschritten werden.

Zur Sicherung gegen versehentliche Berührung der Stromschienen während der Montage oder einer Wartung, sowie um die Stromschienen mit Ausnahme der zur Kontaktierung vorgesehenen Kontaktierungsbereiche der Stromschienen gegen die Umgebung abzuschirmen, können die Stromschienen in einem halbschaligen oder beidseitigen Stromschienengehäuse aufgenommen sein.

Um die durch den Stromfluss in der Stromschiene entstehende Wärme effizient abzuführen, ist es bekannt, sogenannte Gap-Pads, beispielsweise in Form kleiner EPDM-Matten oder aus Silikon, und/oder sogenannte Gap-Filler, beispielsweise in Form einer gelartigen Paste, die etwaige zumindest teilweise aushärten kann, vorzusehen, die partiell als thermische Brücke zwischen den Stromschienen und dem Gehäuse dienen. Um den Kontakt beziehungsweise eine flächige Anbindung zwischen den Stromschienen, dem Gap-Filler beziehungsweise Gap-Pad und dem Gehäuse sicherzustellen, werden des Weiteren Niederhalter, typischerweise Kunststoffniederhalter, eingesetzt.

### Darstellung der Erfindung

Ausgehend von dem bekannten Stand der Technik ist es eine Aufgabe der vorliegenden Erfindung, eine verbesserte Stromschienenanordnung zum Einbau in einer Fahrzeugbatterie für ein Elektrofahrzeug, eine verbesserte Fahrzeugbatterie, sowie ein Verfahren zum Herstellen einer Stromschienenanordnung bereitzustellen.

Die Aufgabe wird durch eine Stromschienenanordnung zum Einbau in einer Fahrzeugbatterie für ein Elektrofahrzeug mit den Merkmalen des Anspruchs 1 gelöst. Vorteilhafte Weiterbildungen ergeben sich aus den Unteransprüchen, der Beschreibung und den Figuren.

Entsprechend wird eine Stromschienenanordnung zum Einbau in einer Fahrzeugbatterie für ein Elektrofahrzeug vorgeschlagen, umfassend ein Gehäuse, genauer ein Stromschienengehäuse zum Einhausen von Stromschienen, und eine Mehrzahl von im Gehäuse aufgenommenen Stromschienen, wobei an einer Innenwand eines Gehäuseteiles, insbesondere einer Innenwand an einer Unterschale und/oder an einer Innenwand einer Oberschale, ein aus einem ausgehärteten Kunststoffschaum ausgebildeter Stromschienenaufnahmekörper angeschäumt ist, wobei jede Stromschiene in je einer Aufnahme im zuvor ausgehärteten Stromschienenaufnahmekörper eingesteckt und in dieser gehalten ist.

Durch den Stromschienenaufnahmekörper kann im Vergleich zu herkömmlichen Fahrzeugbatterien, bei welchen die Stromschienen lose beziehungsweise nur punktuell gehalten werden, das Entstehen von Vibrationen in den Stromschienen wesentlich reduziert oder gar gänzlich vermieden werden. Denn der Kunststoffschaum wirkt dämpfend. Zudem kann die Wandstärke des Stromschienenaufnahmekörpers beziehungsweise von dessen Komponenten variiert werden, um eine nochmals verbesserte Vibrationsdämpfung zu erzielen.

### Ferner kann eine vergleichsweise große Menge an Wärme über den

Stromschienenaufnahmekörper aus den darin gehaltenen Stromschienen abgeführt werden, insbesondere, wenn der Stromschienenaufnahmekörper sich im Wesentlichen über die gesamte Länge der Stromschienen erstreckt, gegebenenfalls mit Ausnahme der Kontaktbereiche der Stromschienen. Unter anderem ist eine vergleichsweise große Kontaktfläche zwischen den Stromschienen und dem Stromschienenaufnahmekörper bereitgestellt. Zudem ist die Wärmeleitfähigkeit des Kunststoffschaumes um ein Vielfaches höher, beispielsweise um den Faktor 20 bei Polyurethan, als es bei Luft der Fall ist.

Folglich können in Vergleich zu herkömmlichen Ausführungen kleinere Querschnitte der Stromschienen verwendet werden, da mittels des Stromschienenaufnahmekörpers die thermisch leitende Kontaktfläche vergrößert ist und ein vergleichsweise hohes Wärmeübertragungsvermögen vorliegt.

Ferner kann die Stromschienenanordnung und eine die Stromschienenanordnung umfassende Fahrzeugbatterie im Vergleich zu herkömmlichen Ausführungen mit weniger Bauteilen ausgebildet sein. Unter anderem kann aufgrund des Vorsehens des Stromschienenaufnahmekörpers auf Gap-Pads, Gap-Filler, und Niederhalter inklusive der hierzu erforderlichen Befestigungsschrauben verzichtet werden.

Die Reduzierung der Teilezahl und mithin der erforderlichen Fertigungsschritte zur Herstellung der Stromschienenanordnung beziehungsweise der Fahrzeugbatterie resultiert ferner in einer Reduzierung der Linientaktzeit bei der Herstellung einer Fahrzeugbatterie.

Aufgrund der guten elektrischen Isolationswirkung des Kunststoffschaumes kann bei geeigneter Ausführung des Stromschienenaufnahmekörpers beziehungsweise der mehreren Stromschienenaufnahmekörper eine weitere Reduktion des Bauraumes durch Reduktion der Mindestabstände benachbarter Stromschienen erzielt werden, ohne dass eine Gefahr der Lichtbogenbildung erhöht wird oder gar besteht.

Der Begriff "*Anschäumen*" bzw "*angeschäumt*" ist hier definiert als ein während eines Schäumungsprozesses eines Kunststoffschaumes entstehendes Haften des reaktiven Schaummaterials an der Oberfläche eines Haftpartners. Hier wird entsprechend bei einem Schäumungsprozess zur Ausbildung des Stromschienenaufnahmekörpers aufgrund der während des Aufschäumens adhäsiven Wirkung des reaktiven Schaumes der Schaum mit der Innenwand dauerhaft haftend verbunden, und zwar ohne, dass ein Klebeschritt mit einem zusätzlichen Klebstoff erfolgt. Es liegt also keine zusätzliche Schicht zwischen dem Schaummaterial des Stromschienenaufnahmekörpers und der Innenwand. Vielmehr haftet der Stromschienenaufnahmekörper direkt an der Innenwand.

Die Aufnahmen können jeweils zwischen zwei benachbarten, sich in einer Längserstreckung des Stromschienenaufnahmekörpers erstreckenden Rippen ausgebildet sein, wobei insbesondere die Rippen sich quer zur Längserstreckung von einer an der Innenwand angeordneten Basis des Stromschienenaufnahmekörpers von der Basis weg in einer Höhenrichtung erstrecken. Mit anderen Worten kann der Stromschienenaufnahmekörper in einer Schnittansicht orthogonal zur Längserstreckung eine kammartige Querschnittsform aufweisen, wobei die Rippen die Zähne beziehungsweise synonym Zinken des Kamms darstellen.

Die Rippen können ein freies Ende gegenüber der Basis aufweisen, wobei insbesondere das freie Ende zumindest einer Rippe in Höhenrichtung sich verjüngend ausgebildet ist, wobei beispielsweise zumindest ein freies Ende zumindest eine Fase und/oder zumindest eine Rundung aufweist.

Zumindest eine der Rippen kann an ihrem freien Ende gegenüber der Basis eine Einführschräge zum Einführen einer Stromschiene in eine Aufnahme aufweisen. Durch die Einführschräge kann die Montage beziehungsweise das Einstecken der Stromschiene in die Aufnahme vereinfacht werden. Insbesondere kann die Einsteckbewegung dann weniger präzise und/oder schneller und/oder mit höherer Einsteckkraft ausgeführt werden als bei Ausführungen ohne Einführschräge, bei welchen mit erhöhter Präzision gearbeitet werden muss.

Der Kunststoffschaum des Stromschienenaufnahmekörpers kann Polyurethan umfassen.

Eine Breite der Aufnahmen kann um einen vorgegebenen Betrag kleiner ausgebildet sein, als eine Breite der in der jeweiligen Aufnahme aufgenommenen Stromschiene. Dadurch kann eine Klemmwirkung auf die Stromschiene erzielt werden, so dass diese fest in der Aufnahme gehalten und gegen ein Verrutschen gesichert ist.

Das Gehäuse kann eine Oberschale mit einem Stromschienenaufnahmekörper und eine Unterschale mit einem Stromschienenaufnahmekörper umfassen, wobei die Rippen des Stromschienenaufnahmekörpers der Oberschale mit gegenüberliegenden Rippen des Stromschienenaufnahmekörpers der Unterschale an deren freien Enden in Kontakt sind, wobei bevorzugt zumindest ein Paar aus sich gegenüberliegenden Rippen eine Nut-Feder-Verbindung ausbildet.

Zumindest eine der Rippen kann als in Längserstreckung durchgehende Rippe ausgebildet sein und/oder zumindest eine der Rippen kann als eine in Längserstreckung segmentierte Rippe ausgebildet sein, wobei insbesondere zumindest zwei benachbarte, eine Aufnahme bildende Rippen segmentierten Rippen sind, wobei bevorzugt die beiden segmentierten Rippen, genauer deren Segmente, in Längserstreckung zumindest teilweise alternierend angeordnet sind, wobei bevorzugt die beiden segmentierten Rippen, genauer deren Segmente, in Längserstreckung einen Abstand zueinander aufweisen, sich direkt anschließen, oder einen Überlappungsbereich aufweisen.

Der Stromschienenaufnahmekörper kann zumindest einen Einsatz aufweisen, bevorzugt einen als Befestigungspunkt ausgebildeten Einsatz.

Die vorstehend genannte Aufgabe wird ferner durch eine Fahrzeugbatterie für ein Elektrofahrzeug mit den Merkmalen des Anspruchs 11 gelöst. Vorteilhafte Weiterbildungen ergeben sich aus der vorliegenden Beschreibung und den Figuren.

Entsprechend wird eine Fahrzeugbatterie für ein Elektrofahrzeug vorgeschlagen, umfassend eine Mehrzahl von miteinander zu verschaltenden Batterieeinheiten, insbesondere eine Mehrzahl von je eine Vielzahl von Batteriezellen umfassenden Batteriemodulen, und eine Stromschienenanordnung gemäß einer der vorstehenden Ausführungsformen. Die Batterieeinheiten können durch die Stromschienen der Stromschienenanordnung elektrisch kontaktiert sein.

Durch die Fahrzeugbatterie werden die hinsichtlich der Stromschienenanordnung beschriebenen Vorteile und Wirkungen in analoger Weise erzielt.

Unter einer "*Fahrzeugbatterie für ein Elektrofahrzeug"* wird vorliegend die Primärantriebsbatterie des Elektrofahrzeuges verstanden, also jene Batterie, welche die (Hochvolt-)Leistung für den als Traktions-Primärantrieb ausgebildeten Elektromotor des Elektrofahrzeuges liefert.

Die oben gestellte Aufgabe wird weiterhin durch ein Verfahren zum Herstellen einer Stromschienenanordnung zum Einbau in eine Fahrzeugbatterie eines Elektrofahrzeuges mit den Merkmalen des Anspruchs 12 gelöst. Vorteilhafte Weiterbildungen des Verfahrens ergeben sich aus der vorliegenden Beschreibung und den Figuren.

Entsprechend wird ein Verfahren zum Herstellen einer Stromschienenanordnung zum Einbau in eine Fahrzeugbatterie eines Elektrofahrzeuges vorgeschlagen, umfassend das Einsetzen eines Gehäuseteiles, insbesondere eine Oberschale und/oder eine Unterschale, eines Gehäuses in ein Schäumwerkzeug, das Ausschäumen einer im geschlossenen Schäumwerkzeug vorliegenden Form durch Einbringen eines aushärtbaren Schäummaterials zum Ausbilden eines Kunststoffschaums, derart, dass das Schäummaterial an einer Innenwand des Gehäuseteils während des Aufschäumens eine dauerhaft haftende Verbindung eingeht, das Aushärten des Kunststoffmaterials, so dass ein Verbundkörper aus dem Gehäuseteil und einem aus dem ausgehärteten Kunststoffschaum ausgebildeten, an der Innenwand des Gehäuseteils angeschäumten Stromschienenaufnahmekörper ausgebildet wird, das Entformen des Verbundkörpers aus dem Gehäuseteil und dem an der Innenwand des Gehäuseteils angeschäumten Stromschienenaufnahmekörpers, und das Einstecken einer Mehrzahl von Stromschienen in am ausgehärteten Stromschienenaufnahmekörper vorgesehene Aufnahmen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Schnittansicht durch eine Stromschienenanordnung für eine Fahrzeugbatterie in einem Elektrofahrzeug;
- Figur 2: schematisch eine Schnittansicht durch die Stromschienenanordnung aus Figur 1 orthogonal zu einer Längserstreckung der Stromschienenanordnung;
- Figur 3: schematisch eine Schnittansicht durch eine Stromschienenanordnung gemäß einer weiteren Ausführungsform orthogonal zu einer Längserstreckung der Stromschienenanordnung;
- Figur 4: schematisch eine Schnittansicht durch eine Stromschienenanordnung gemäß einer weiteren Ausführungsform orthogonal zu einer Längserstreckung der Stromschienenanordnung; und
- Figur 5: schematisch eine Draufsicht in Höhenrichtung auf eine Stromschienenanordnung gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

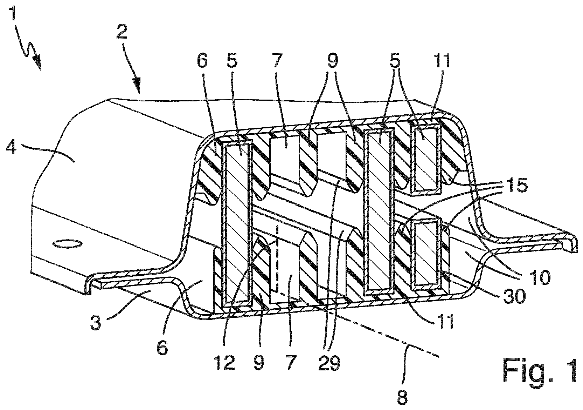

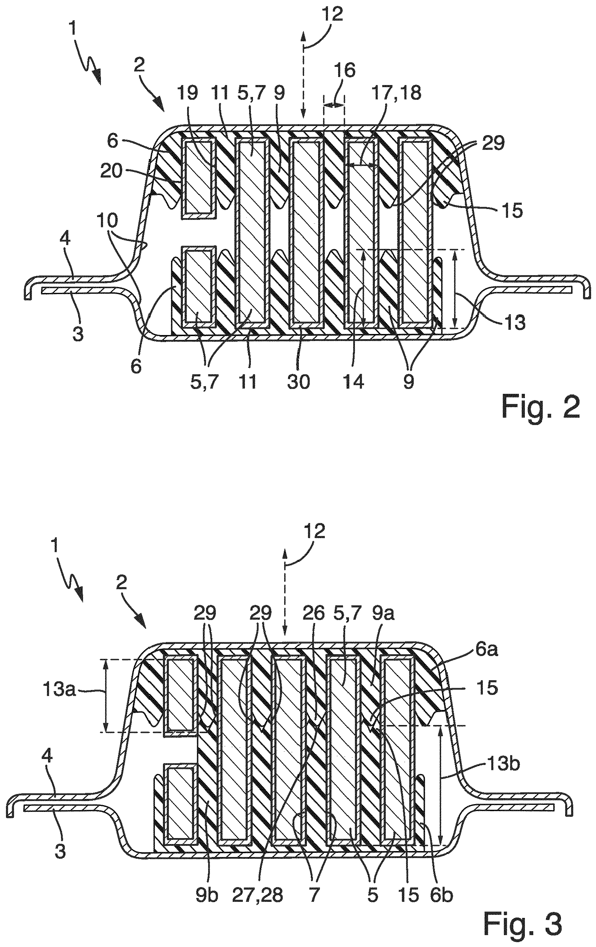

In Figur 1 ist schematisch eine perspektivische Schnittansicht durch eine Stromschienenanordnung 1 für eine Fahrzeugbatterie in einem Elektrofahrzeug gezeigt. Figur 2 zeigt die Schnittansicht aus Figur 1 nochmals orthogonal zur Schnittebene.

Die Stromschienenanordnung 1 umfasst ein Gehäuse 2 mit einer Unterschale 3 und einer Oberschale 4. Im Inneren des Gehäuses 2 ist einer Mehrzahl von Stromschienen 5 aufgenommen.

An einer Innenwand 10 der Unterschale 3 ist ein aus einem Kunststoffschaum ausgebildeter Stromschienenaufnahmekörper 6 angeschäumt, also bei einem Schäumungsprozess zur Ausbildung des Stromschienenaufnahmekörpers 6 aufgrund der während des Aufschäumens adhäsiven Wirkung des reaktiven Schaumes mit der Innenwand der Unterschale 3 dauerhaft haftend verbunden, ohne, dass ein Klebeschritt mit einem zusätzlichen Klebstoff erfolgte.

Der Stromschienenaufnahmekörper 6 umfasst eine Mehrzahl von sich in einer Längsrichtung 8 erstreckenden kanalartigen Aufnahmen 7 zum Aufnehmen einer Stromschiene 5. Die Aufnahmen 7 sind jeweils zum Aufnehmen einer Stromschiene 5 ausgebildet. Die Längsrichtung 8 entspricht der Längserstreckung 8 der jeweils aufzunehmenden Stromschiene 5.

Die Aufnahmen 5 sind im Stromschienenaufnahmekörper 6 jeweils zwischen zwei benachbarten, sich in Längserstreckung 8 erstreckende Rippen 9 ausgebildet. Die Rippen 9 erstrecken sich ferner quer zu deren Längserstreckung 8 in einer Höhenrichtung 12 von einer an der Innenwand 10 der Unterschale 3 angeordneten Basis 11 des Stromschienenaufnahmekörpers 6 von der Basis 11 schräg beziehungsweise quer zur Basis 11, also schräg beziehungsweise quer zur Innenwand 10 weg. Sie weisen mithin eine vorgegebene Höhe 13 auf. Die Aufnahmen 7 weisen entsprechend eine vorgegebene Tiefe 14 auf, welche vorzugsweise im Wesentlichen durch die Höhe 13 der Rippen 9 bestimmt ist.

Die Rippen 9 sind an ihrem freien Ende 15 gegenüber der Basis 11 in Höhenrichtung 12 sich verjüngend ausgebildet. Mit anderen Worten nimmt die Breite 16 der Rippen 9 orthogonal zur Längserstreckung 8 und orthogonal zur Höhenrichtung 12 am freien Ende mit zunehmenden Abstand von der Basis 11 ab. Das freie Ende 15 kann zumindest eine Fase und/oder zumindest eine Rundung aufweisen. Entsprechend bildet der sich verjüngende Bereich der Rippen 9 eine Einführschräge 29, durch welche eine vereinfachte Montage der Stromschienen 5 in jeweilige die Aufnahme 7 ermöglicht ist.

Zudem umfasst die Oberschale 4 des Gehäuses 2 analog zur Unterschale 3 ebenfalls einen angeschäumten, aus einem Kunststoffschaum ausgebildeten Stromschienenaufnahmekörper 6, welcher dieselben Merkmale und Eingeschalten wie der Stromschienenaufnahmekörper 6 der Unterschale 2 aufweist, weshalb auf eine erneute Beschreibung des Stromschienenaufnahmekörpers 6 der Oberschale 4 verzichtet und auf die vorstehenden Ausführungen verwiesen wird.

Die Gehäuseteile 3, 4 des Gehäuses 2 sind gemäß dieser Ausführungsform aus einer Aluminiumlegierung ausgebildet, sind aber nicht darauf beschränkt.

Der Kunststoffschaum des Stromschienenaufnahmekörpers 6 umfasst gemäß dieser Ausführungsform zumindest Polyurethan (PU, synonym auch PUR). Mit anderen Worten ist der Stromschienenaufnahmekörper 6 im Wesentlichen aus ausgehärtetem PU-Schaum ausgebildet. Er ist aber nicht darauf beschränkt und es können auch andere geeignete Schaummaterialien verwendet werden.

Die Breite 17 der Aufnahmen 7 kann um einen vorgegebenen Betrag kleiner ausgebildet sein, als die Breite 18 der in der jeweiligen Aufnahme 7 aufzunehmenden Stromschiene 5. So kann die Stromschiene 5 in der Aufnahme 7 klemmend aufgenommen werden. Denn die Seitenwände 19 der die Aufnahme 7 ausformenden Rippen 9 üben einen Druck auf die Seitenflächen 20 der darin gehaltenen Stromschiene 5 aus. Zudem kann so eine besonders gute Wärmeleitung von der Stromschiene 5 in die Rippen 9 erzielt werden. Die Seitenwände 19 der Rippen 9 werden gegen die Seitenflächen 20 der Stromschiene 5 gedrückt, so dass eine flächige Anlage zwischen den beiden vorgenannten erzielt ist, also keine oder nur in geringem Maße Luftporen zwischen Seitenwand 19 und Seitenfläche 20 vorliegt, welche thermisch isolierend wirken könnten.

Durch das flächige Anhaften der Basis 11 an der Innenwand 10 ist zudem eine im Wesentlichen vollflächige, direkte Wärmeleitung zwischen dem Stromschienenaufnahmekörper 6 und dem Gehäuse 2 bereitgestellt.

Die Stromschienen 5 umfassen vorliegend optional eine Berührschutzummantelung 30.

Figur 3 zeigt eine Schnittansicht orthogonal zur Längserstreckung 8 einer Stromschienenanordnung 1 gemäß einer weiteren Ausführungsform. Diese entspricht im Wesentlichen jener der Figuren 1 und 2, wobei hier die Rippen 9a des Stromschienenaufnahmekörpers 6a der Oberschale 4 und die Rippen 9b des Stromschienenaufnahmekörpers 6b der Unterschale 3 je eine Höhe 13a, 13b aufweisen, so dass sie im zusammengebauten Zustand, wie in Figur 3 gezeigt, in Kontakt sind. Dadurch steht die Stromschienen 5 in Höhenrichtung 12 gesehen im Wesentlichen über ihre gesamte Höhe in Kontakt mit dem Schaumkörpermaterial der Stromschienenaufnahmekörper 6a, 6b. Entsprechend steht eine besonders große Fläche für den Wärmeabtransport aus den Stromschienen 5 in die Stromschienenaufnahmekörper 6a, 6b zur Verfügung, ähnlich einer kompletten Umschäumung der Stromschienen 5. Zudem können auf diese Weise die Stromschienen 5 quer zur Längserstreckung 8 und quer zur Höhenrichtung 12 gesehen voneinander gekapselt sein. Entsprechend ist die Gefahr des Entstehens eines Lichtbogens zwischen benachbarten Stromschienen 5 aufgrund des Fehlens eines Luftspaltes zwischen benachbarten Stromschienen 5 reduziert oder gar gänzlich verhindert. Daher können die Stromschienen 5 besonders nahe aneinander positioniert werden.

Um eine besonders gute Dichtwirkung zu erzielen, sind die als sich verjüngende Feder beziehungsweise Nase 26 ausgebildeten freien Enden 15 der Rippen 9a des Stromschienenaufnahmekörpers 6a der Oberschale 4 derart ausgebildet, dass sie mit an den freien Enden 15 der Rippen 9b des Stromschienenaufnahmekörpers 6b der Unterschale 3 vorgesehenen Endaufnahmen 27, vorliegend ausgebildet als eine sich in Längserstreckung 8 am freien Ende der Rippen 9b des Stromschienenaufnahmekörpers 6b der Unterschale 3 erstreckende Nut 28, in Eingriff sind; sie bilden mithin eine Nut-Feder-Verbindung aus. Entsprechend werden bei einem Zusammenbau die in Form der Nase 26 ausgebildeten freien Enden 15 des Stromschienenaufnahmekörpers 6a der Oberschale 4 in die an den freien Enden 15 des Stromschienenaufnahmekörpers 6b der Unterschale 3 vorgesehenen Nuten 28 eingeschoben und in Kontakt gebracht.

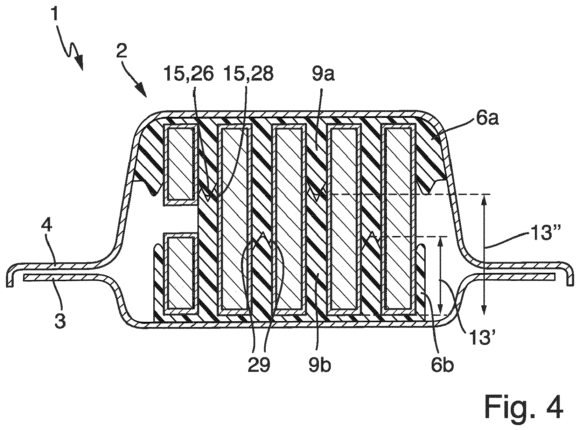

Figur 4 zeigt eine Schnittansicht orthogonal zur Längserstreckung 8 einer Stromschienenanordnung 1 gemäß einer weiteren Ausführungsform. Diese entspricht im Wesentlichen jener aus Figur 3, wobei die Rippen 9a, 9b der beiden Stromschienenaufnahmekörper 6a, 6b nicht jeweils alle die gleiche Höhe 13 aufweisen, sondern alternierend eine erste Höhe 13' und eine zweite Höhe 13". Zudem sind an den freien Enden 15 die Nasen 26 und Nuten 28 alternierend vorgesehen.

Wie den Figuren 3 und 4 zu entnehmen, umfasst jede Rippe 9a, 9b zudem die Einführschrägen 29.

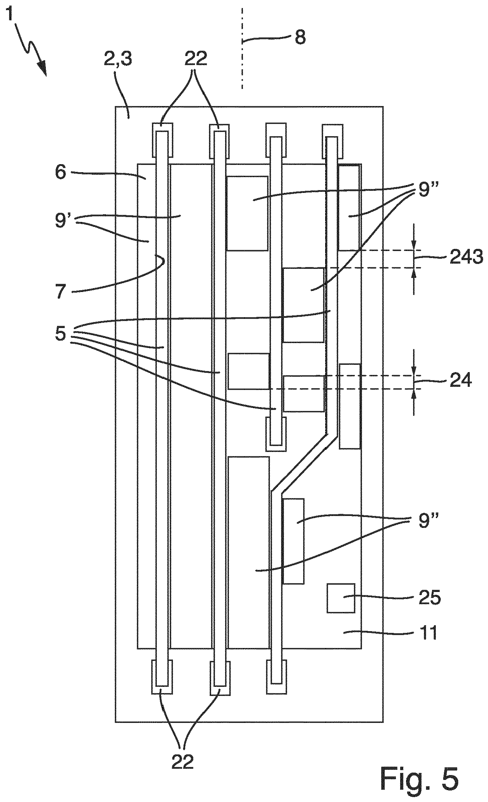

Aus Figur 5 ist eine Draufsicht in Höhenrichtung 12 auf eine Stromschienenanordnung 1 für eine Fahrzeugbatterie gemäß einer weiteren Ausführungsform gezeigt, welche im Wesentlichen jener aus den Figuren 1 und 2 entspricht.

Die Stromschienenanordnung 1 umfasst ein aus einer Unterschale 3 ausgebildetes Gehäuse 2, an welchem ein aus einem ausgehärteten Kunststoffschaum ausgebildeter Stromschienenaufnahmekörper 6 angeschäumt ist.

In den Aufnahmen 7 des Stromschienenaufnahmekörpers 6 ist je eine Stromschiene 5 aufgenommen und gehalten. Das Gehäuse 2 sowie der Stromschienenaufnahmekörper 6 weisen an den Kontaktbereichen 21 der Stromschienen 5, an welche diese elektrisch kontaktiert werden sollen, Durchbrüche 22 auf.

Wie Figur 5 zu entnehmen, sind einige der Rippen 9' in Längserstreckung 8 durchgehend ausgebildet. Der Stromschienenaufnahmekörper 6 umfasst zudem Rippen 9", die segmentiert ausgebildet sind. Mit anderen Worten sind diese Rippen 9" in Längserstreckung 8 unterbrochen ausgebildet. Vorzugsweise sind die beiden eine Aufnahme 7 bildenden segmentierten Rippen 9", genauer deren die segmentierte Rippe 9" ausbildenden Segmente, zumindest teilweise in Längserstreckung 8 alternierend angeordnet. Die Rippen 9", genauer deren Segmente, können in Längserstreckung 8 einen Abstand 23 zueinander aufweisen, sich direkt anschließen, oder einen Überlappungsbereich 24 aufweisen.

Der Stromschienenaufnahmekörper 6 kann ferner zumindest einen Einsatz 25 aufweisen. Der Einsatz 25 kann als Befestigungspunkt für eine Komponente der Stromschienenanordnung 1 und/oder einer weiteren Komponente einer die Stromschienenanordnung 1 aufweisenden Fahrzeugbatterie ausgebildet sein. Der Einsatz 25 kann beispielsweise als Anschraubpunkt ausgebildet sein und hierzu einen Gewindestift oder ein Innengewinde aufweisen.

Der Einsatz 25 kann ferner einen Sensor umfassen, bevorzugt einen Temperatursensor, einen Feuchtesensor oder einen Beschleunigungssensor.

Der Einsatz 25 ist zumindest teilweise von dem ausgehärteten Schaummaterial des Stromschienenaufnahmekörpers 6 umgeben; er ist mithin zumindest teilweise im Stromschienenaufnahmekörpers 6 aufgenommen.

Im Folgenden wird auf ein Verfahren zum Herstellen einer Stromschienenanordnung eingegangen.

In einem ersten Schritt wird in einem Schäumwerkzeug eine Oberschale 4 und/oder eine Unterschale 3 des Gehäuses 1 eingelegt und das Schäumwerkzeug geschlossen. Anschließend wird die im Schäumwerkzeug vorliegende Form gegossen, also das Ausgangsmaterial des Kunststoffmaterials, vorliegend, aber nicht einschränkend, Polyurethan (PU) eingeschäumt. Aufgrund seiner sehr guten Haftungseigenschaften haftet die aufschäumende Polyurethanmasse am Aluminiummaterial des Gehäuses 2 an den Innenwänden 10. Optional kann eine Vorbehandlung der Oberflächen mittels Reinigen und/oder Aktivierung erfolgen.

Entsprechend sind zwei Verbundkörper geformt, welche jeweils aus einer Gehäuseschale (Oberschale 4 oder Unterschale 3) und dem an der Innenwand 10 angeschäumten Stromschienenaufnahmekörper 6 aus dem ausgehärteten Polyurethan ausgebildet sind.

Der Zusammenbau der Stromschienenanordnung 1 kann entweder direkt während des Zusammenbaus der Fahrzeugbatterie erfolgen. Dann wird zunächst die mit dem angeschäumten Stromschienenaufnahmekörper 6 versehene Unterschale 3 in die Fahrzeugbatterie eingelegt und etwaige vorpositioniert oder positioniert. Dann können die Mehrzahl von Stromschienen 5 in die einzelnen Aufnahmen 7 im Stromschienenaufnahmekörper 6 eingesteckt und gegebenenfalls mit Kontaktierungspunkten in der Fahrzeugbatterie elektrisch und/oder mechanisch kontaktiert werden. Im Anschluss kann die Oberschale 4 aufgesetzt werden. Hierzu wird der Stromschienenaufnahmekörper 6 der Oberschale 4 auf die im Stromschienenaufnahmekörper 6 der Unterschale 3 gehaltenen Stromschienen 5 aufgesteckt, bis die Oberschale 4 relativ zur Unterschale 3 beziehungsweise innerhalb der Fahrzeugbatterie wie vorgesehen positioniert ist.

Alternativ kann der Zusammenbau der Stromschienenanordnung 1 zumindest teilweise vor dem eigentlichen Zusammenbau der Fahrzeugbatterie erfolgen. Dann wird die Mehrzahl von Stromschienen 5 in der Stromschienenaufnahmekörper 6 der Unterschale 3 oder der Oberschale 4 gesteckt und die jeweils andere Schale 4, 3 des Gehäuses 2 aufgesteckt und die Gehäuseschalen 3, 4 vorzugsweise bereits miteinander verbunden, beispielsweise verschraubt, bevor die so entstandene Baugruppe als Ganzes in die Fahrzeugbatterie eingebaut wird.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Stromschienenanordnung
- 2: Gehäuse
- 3: Unterschale
- 4: Oberschale
- 5: Stromschiene
- 6: Stromschienenaufnahmekörper
- 7: Aufnahme
- 8: Längserstreckung
- 9: Rippe
- 10: Innenwand
- 11: Basis
- 12: Höhenrichtung
- 13: Höhe
- 14: Tiefe
- 15: Freies Ende
- 16: Breite der Rippe
- 17: Breite der Aufnahme
- 18: Breite der Stromschiene
- 19: Seitenwand
- 20: Seitenfläche
- 22: Durchbruch
- 25: Einsatz
- 26: Nase
- 27: Endaufnahme
- 28: Nut
- 29: Einführschräge
- 30: Berührschutzummantelung

## Patentansprüche

1. Stromschienenanordnung (1) zum Einbau in einer Fahrzeugbatterie für ein Elektrofahrzeug, umfassend ein Gehäuse (2) und eine Mehrzahl von im Gehäuse (2) aufgenommenen Stromschienen (5),
**dadurch gekennzeichnet, dass**
an einer Innenwand (10) eines Gehäuseteiles, insbesondere an einer Innenwand (10) einer Unterschale (3) und/oder an einer Innenwand (10) einer Oberschale (4), ein aus einem ausgehärteten Kunststoffschaum ausgebildeter Stromschienenaufnahmekörper (6) angeschäumt ist, wobei jede Stromschiene (5) in je einer Aufnahme (7) im Stromschienenaufnahmekörper (6) eingesteckt und in dieser gehalten ist.

2. Stromschienenanordnung (1) gemäß Anspruch 1, **dadurch gekennzeichnet, dass** die Aufnahmen (7) jeweils zwischen zwei benachbarten, sich in einer Längserstreckung (8) des Stromschienenaufnahmekörpers (6) erstreckende Rippen (9) ausgebildet sind, wobei insbesondere die Rippen (9) sich ferner quer zur Längserstreckung (8) von einer an der Innenwand (10) angeordneten Basis (11) des Stromschienenaufnahmekörpers (6) von der Basis (11) weg in einer Höhenrichtung (12) erstrecken.

3. Stromschienenanordnung (1) gemäß Anspruch 2, **dadurch gekennzeichnet, dass** die Rippen (9) ein freies Ende (15) gegenüber der Basis (11) aufweisen.

4. Stromschienenanordnung (1) gemäß Anspruch 3, **dadurch gekennzeichnet, dass** das freie Ende (15) zumindest einer Rippe (9) in Höhenrichtung (12) sich verjüngend ausgebildet ist, wobei insbesondere zumindest ein freies Ende (15) zumindest eine Fase und/oder zumindest eine Rundung aufweist.

5. Stromschienenanordnung (1) gemäß Anspruch 3 oder 4, **dadurch gekennzeichnet, dass** zumindest eine der Rippen (9) an ihrem freien Ende (25) gegenüber der Basis (11) eine Einführschräge (29) zum Einführen einer Stromschiene (5) in eine zugeordnete Aufnahme (7) aufweist.

6. Stromschienenanordnung (1) gemäß einem der vorstehenden Ansprüche, **dadurch gekennzeichnet, dass** der Kunststoffschaum des Stromschienenaufnahmekörpers (6) Polyurethan umfasst.

7. Stromschienenanordnung (1) gemäß einem der vorstehenden Ansprüche, **dadurch gekennzeichnet, dass** eine Breite (17) der Aufnahmen (7) um einen vorgegebenen Betrag kleiner ausgebildet ist als eine Breite (18) der in der jeweiligen Aufnahme (7) aufgenommenen Stromschiene (5).

8. Stromschienenanordnung (1) gemäß einem der vorstehenden Ansprüche, **dadurch gekennzeichnet, dass** das Gehäuse (2) eine Oberschale (4) mit einem Stromschienenaufnahmekörper (6a) und eine Unterschale (3) mit einem Stromschienenaufnahmekörper (6b) umfasst, wobei die Rippen (9a) des Stromschienenaufnahmekörpers (6a) der Oberschale (4) mit gegenüberliegenden Rippen (9b) des Stromschienenaufnahmekörpers (6b) der Unterschale (3) an deren freien Enden (15) in Kontakt sind, wobei optional zumindest ein Paar aus sich gegenüberliegenden Rippen (9a, 9b) eine Nut-Feder-Verbindung ausbildet.

9. Stromschienenanordnung (1) gemäß einem der vorstehenden Ansprüche, **dadurch gekennzeichnet, dass** zumindest eine der Rippen (9) als in Längserstreckung (8) durchgehende Rippe (9') ausgebildet ist und/oder zumindest eine der Rippen (9) als eine in Längserstreckung (8) segmentierte Rippe (9") ausgebildet ist, wobei optional zumindest zwei benachbarte, eine Aufnahme (7) bildende Rippen (9) segmentierten Rippen (9") sind, wobei insbesondere die beiden segmentierten Rippen (9") in Längserstreckung (8) zumindest teilweise alternierend angeordnet sind, wobei insbesondere die beiden segmentierten Rippen (9") in Längserstreckung (8) einen Abstand (23) zueinander aufweisen, sich direkt anschließen, oder einen Überlappungsbereich (24) aufweisen.

10. Stromschienenanordnung (1) gemäß einem der vorstehenden Ansprüche, **dadurch gekennzeichnet, dass** der Stromschienenaufnahmekörper (6) zumindest einen Einsatz (25) aufweist, insbesondere einen als Befestigungspunkt ausgebildeten Einsatz (25).

11. Fahrzeugbatterie für ein Elektrofahrzeug, umfassend eine Mehrzahl von miteinander zu verschaltenden Batterieeinheiten, insbesondere eine Mehrzahl von je eine Vielzahl von Batteriezellen umfassenden Batteriemodulen, **gekennzeichnet durch** eine Stromschienenanordnung (1) gemäß einem der vorstehenden Ansprüche.

12. Verfahren zum Herstellen einer Stromschienenanordnung (1) zum Einbau in eine Fahrzeugbatterie eines Elektrofahrzeuges, umfassend:
- Einsetzen eines Gehäuseteiles, bevorzugt eine Oberschale (4) und/oder eine Unterschale (3), eines Gehäuses (2) in ein Schäumwerkzeug,
- Ausschäumen einer im geschlossenen Schäumwerkzeug vorliegenden Form durch Einbringen eines aushärtbares Schäummaterials zum Ausbilden eines Kunststoffschaums, derart, dass das Schäummaterial an einer Innenwand (10) des Gehäuseteils während des Aufschäumens eine dauerhaft haftende Verbindung eingeht,
- Aushärten des Kunststoffmaterials, so dass ein Verbundkörper aus dem Gehäuseteil und einem aus dem ausgehärteten Kunststoffschaum ausgebildeten, an der Innenwand (10) des Gehäuseteils angeschäumten Stromschienenaufnahmekörper (6) ausgebildet wird,
- Entformen des Verbundkörpers aus dem Gehäuseteil und dem an der Innenwand (10) des Gehäuseteils angeschäumten Stromschienenaufnahmekörper (6), und
- Einstecken einer Mehrzahl von Stromschienen (5) in am ausgehärteten Stromschienenaufnahmekörper (6) vorgesehene Aufnahmen (7).
